Europäisches Patentamt

European Patent Office

Office européen des brevets

(11) Numéro de publication: **0 386 460**
**A2**

## (12) DEMANDE DE BREVET EUROPEEN

(21) Numéro de dépôt: 90102061.0

(22) Date de dépôt: 02.02.90

(51) Int. Cl.5: **F16K 5/20**

(30) Priorité: 06.03.89 LU 87467

(43) Date de publication de la demande:
**12.09.90 Bulletin 90/37**

(84) Etats contractants désignés:
**BE ES FR IT NL**

(71) Demandeur: **PAUL WURTH S.A.**
**32 rue d'Alsace**
**L-1122 Luxembourg(LU)**

(72) Inventeur: **Mailliet, Pierre**
**1 Allée Drosbach**
**L-1423 Howald(LU)**
Inventeur: **Radoux, Henri**
**10 Rue de Schmitshausen**

**L-7252 Béreldange(LU)**
Inventeur: **Ulveling, Léon**
**30 Rue Dr. J. Peffer**
**L-2319 Howald(LU)**
Inventeur: **Loutsch, Jeannot**
**16 Ceinture des Rosiers**
**L-2446 Howald(LU)**
Inventeur: **Lonardi, Emile**
**30 Rue de Schouweiler**
**L-4945 Bascharage(LU)**

(74) Mandataire: **Meyers, Ernest et al**
**Office de Brevets FREYLINGER & ASSOCIES**
**B.P. 1 321, route d'Arlon**
**L-8001 Strassen(LU)**

(54) **Dispositif d'obturation de conduites de transport de produits en vrac.**

(57) Le dispositif comporte un boîtier (10) avec une ouverture (18) de passage circulaire, un élément de fermeture pivotant (20) en forme de calotte sphérique (22), un joint d'étanchéité circulaire (30) entourant ladite ouverture et monté sur un support annulaire (40), déplaçable axialement vers l'élément de fermeture (20) sous l'action d'un fluide pneumatique, ledit support annulaire comportant, à cet effet, une surface annulaire passive exposée à la pression dans ledit boitier, la surface active du support (30) étant plus grande que sa surface passive.

FIG. 1

# DISPOSITIF D'OBTURATION DE CONDUITES DE TRANSPORT DE PRODUITS EN VRAC

La présente invention concerne un dispositif d'obturation de conduites de transport de produits en vrac comprenant un boîtier avec une ouverture de passage circulaire, un élément de fermeture en forme de calotte sphérique monté de manière pivotante dans ledit boîtier, des moyens pour faire pivoter ledit élément de fermeture entre une position de fermeture transversale par rapport à ladite ouverture de passage et une position latérale de dégagement de l'ouverture, un joint d'étanchéité circulaire entourant ladite ouverture et pouvant coopérer avec la partie périphérique de l'élément de fermeture, ledit joint étant monté sur un support annulaire déplaçable axialement vers l'élément de fermeture sous l'action d'un fluide pneumatique, ledit support annulaire comportant, à cet effet, une surface annulaire active soumise à la pression des fluides pneumatiques et qui est opposée à une surface annulaire passive exposée à la pression dans le boîtier.

Un dispositif d'obturation de ce genre est connu du document DE-A1-3544609. Dans ce dispositif connu le vérin pneumatique annulaire est délimité radialement par un compensateur à soufflet intérieur et un compensateur à soufflet extérieur. L'application du joint sur l'élément de fermeture est réalisé par la mise sous pression du vérin pneumatique, le déplacement du joint étant permis par la détente des ondulations des deux compensateurs. Pour le déplacement en sens inverse, le vérin pneumatique est aéré et on utilise l'élasticité naturelle des ondulations du compensateur pour soulever le joint de l'élément de fermeture. Or, en attribuant au compensateur des fonctions de ressort, ce qui n'est pas sa première vocation, il faut tenir compte du fait que, contrairement à un ressort, un compensateur ne peut pas être précontraint, de sorte qu'il faut un certain nombre d'ondulations pour assurer le déplacement souhaité, ce qui augmente la hauteur du vérin pneumatique annulaire.

Ces dispositifs qui sont notamment utilisés dans des systèmes de transports pneumatiques, comme p.ex. du charbon en poudre, doivent pouvoir contenir la pression aussi bien en amont qu'en aval de l'élément de fermeture. Dans le dispositif connu la surface du support du joint qui est exposée à la pression dans le boîtier correspond sensiblement à la surface annulaire subissant l'action du fluide pneumatique, notamment en cas d'usure des joints. Pour pouvoir assurer une bonne fermeture contre la pression à l'intérieur du boîtier il faut que la pression du fluide pneumatique soit sensiblement supérieure à la pression du système de transport pneumatique, d'autant plus qu'il faut vaincre la force de traction de compensateur qui a lieu en sens contraire. Autrement dit, le dispositif connu ne permet pas de se servir de la station de pressurisation principale du système de transport pour actionner le vérin pneumatique, étant donné qu'il faut une pression supérieure. Il faut donc un compresseur séparé pour actionner le vérin pneumatique.

Le but de la présente invention est de prévoir un dispositif d'obturation perfectionné qui ne présente pas les inconvénients décrits ci-dessus du dispositif connu.

Pour atteindre cet objectif, la présente invention propose un dispositif d'obturation du genre décrit dans le préambule qui est essentiellement caractérisé en ce que la surface active du support annulaire est plus grande que sa surface passive. Il s'en suit que la force exercée par le fluide pneumatique sur le support en vue de la fermeture étanche, est toujours supérieur à la force exercée dans le sens contraire, engendré par la pression à l'intérieur du boîtier et tendant à soulever le joint de l'élément de fermeture. Ceci présente l'avantage de pouvoir se servir de la pression du système de transport pneumatique pour actionner le vérin pneumatique. Il n'est donc pas nécessaire d'avoir un compresseur séparé plus puissant.

Selon un premier mode de réalisation avantageux, le support du joint est soumis à l'action d'un ressort qui exerce ses effets dans le sens opposé à celui du fluide pneumatique. L'utilisation d'un ressort à la place d'un compensateur pour soulever le joint de l'élément de fermeture présente l'avantage de permettre une diminution sensible de la hauteur du vérin pneumatique annulaire.

Le support du joint peut être monté dans un logement annulaire entourant l'ouverture de passage, par l'intermédiaire d'un joint intérieur et d'un joint extérieur contenant la pression du fluide pneumatique et d'un joint intérieur et d'un joint extérieur contenant la pression dans le boîtier.

Tous les quatre joints ont de préférence une section en U s'ouvrant sous l'effet de la pression qu'ils subissent, tandis que l'espace entre les deux joints intérieurs et celui entre les deux joints extérieurs est mis à l'air.

Selon un premier mode de réalisation, la surface annulaire passive du support est délimitée intérieurement par le joint et extérieurement par un compensateur à soufflet qui relie le support à la paroi du boîtier. Ce compensateur n'a pas de fonction de ressort mais sert simplement à délimiter avec le support et la paroi du boîtier une chambre qui est mise à l'air et qui réduit la surface passive du support.

La paroi du boîtier comporte, de préférence dans ladite chambre, un épaulement radial formant une butée pour ledit support.

Selon un autre mode de réalisation, la surface annulaire active du support est délimitée intérieurement par un compensateur à soufflet fixé sur le support et le boîtier.

Selon un autre mode de réalisation, le support est solidaire d'un piston annulaire pneumatique coulissant axialement dans une chambre pneumatique annulaire dans laquelle le support est relié par un compensateur à soufflet intérieur et par un compensateur à soufflet extérieur, tandis que les deux surfaces opposées du piston peuvent être connectées alternativement sur la même source de fluide pneumatique pour déplacer le joint soit vers l'élément de fermeture, soit dans le sens opposé. Autrement dit, dans ce mode de réalisation on se sert de la pression du fluide pneumatique aussi bien pour appliquer le joint sur l'élément de fermeture que pour le soulever de celui-ci. Il n'est donc pas nécessaire de prévoir un ressort pour soulever le joint.

L'étanchéité latérale du piston isolant, l'une de l'autre, les deux surfaces opposées du piston peut être réalisée par des joints annulaires ou des compensateurs à soufflet.

Dans chacun des modes de réalisation, le bord de l'ouverture de passage des matières en vrac est, de préférence, conçu sous forme de racloir.

D'autres particularités et caractéristiques de l'invention ressortiront de la description détaillée de quelques modes de réalisation avantageux présentés ci-dessous, à titre d'illustration, en référence aux dessins annexés dans lesquels:

la figure 1 présente une vue schématique générale, en coupe axiale d'un dispositif d'obturation selon la présente invention;

les figures 2 et 3 représentent chacune une vue schématique latérale, partiellement en coupe, représentant respectivement l'élément de fermeture en position fermée et en position ouverte

la figure 4 montre schématiquement une vue partielle, en coupe axiale d'un premier mode de réalisation d'un dispositif d'obturation;

la figure 5 représente une vue analogue d'un deuxième mode de réalisation;

la figure 6 représente une vue analogue d'un troisième mode de réalisation;

la figure 7 représente une vue analogue d'un quatrième mode de réalisation et

la figure 8 représente une vue analogue d'un cinquième mode de réalisation.

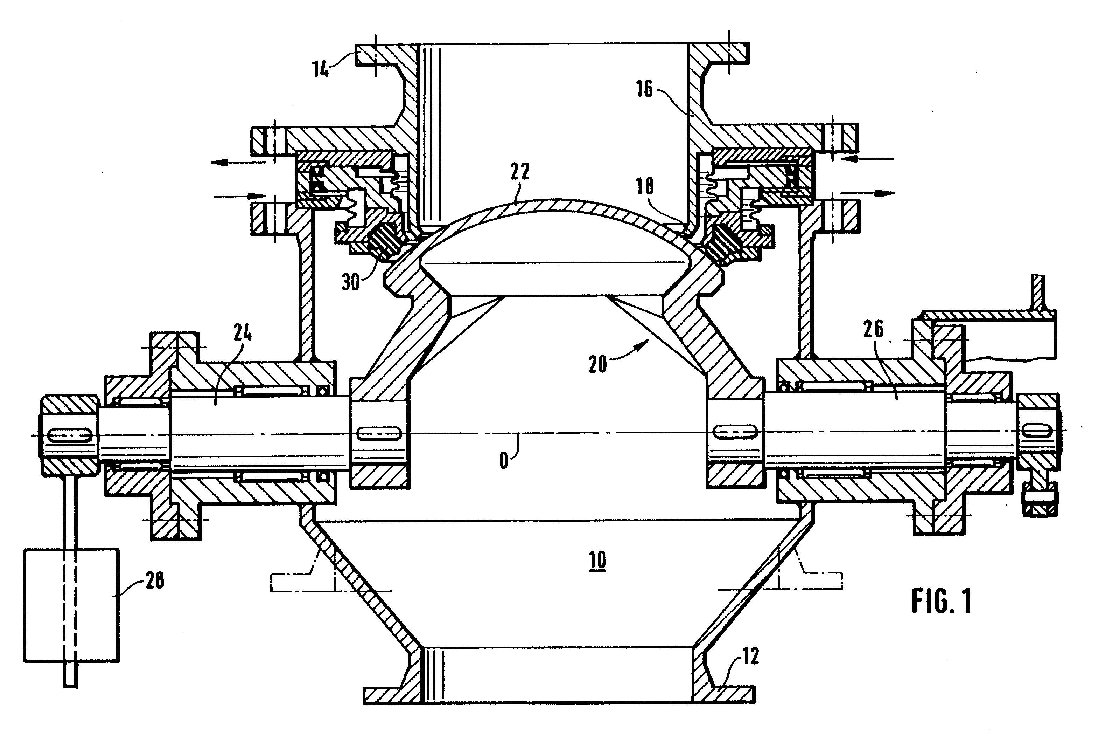

Le dispositif représenté à la figure 1 comporte un boîtier 10 pourvu de deux brides opposées 12, 14 pour être connecté dans une conduite d'écoulement de produits en vrac, comme p.ex. de la poudre de charbon. La partie supérieure du boîtier 10 est conçue sous forme de tubulure 16 se terminant par un bord circulaire de passage 18 avec lequel coopère un élément de fermeture 20. Cet élément de fermeture 20 comporte une calotte sphérique 22 portée par deux arbres 24, 26 qui sont logés et supportés dans des paliers opposés du boîtier 10 de manière à permettre à l'élément de fermeture 20 de pivoter autour de son axe horizontal 0 ou entre la position fermée selon la figure 1 et une position d'ouverture décalée de 90°.

L'un des arbres de support, p.ex. l'arbre 26 est soumis, à l'extérieur du boîtier 10 à un mécanisme d'entraînement pour faire pivoter l'élément de fermeture 22, tandis que l'autre arbre 24 porte à l'extérieur du boîtier 10 un poids 28 qui est supérieur au poids de l'élément de fermeture 22 afin d'assurer à celui-ci une position stable dans la position fermée lorsque les moyens d'entraînement tombent en panne.

L'étanchéité est assurée par un joint annulaire 30 logé dans un support annulaire approprié autour de la tubulure 16. Pour assurer l'étanchéité et permettre en même temps le pivotement de la calotte 22 ce joint 30 est déplaçable axialement par des moyen décrits plus en détail par la suite. Quoiqu'il s'agisse du même joint 30 représenté à gauche et à droite de l'axe vertical sur la figure 1, la partie gauche a été représentée, à des fins d'illustration, en position relevée tandis que la partie à droite a été représentée en position abaissée, appliquée de manière étanche sur la partie périphérique de la calotte 22.

Le bord de l'ouverture de passage 18 est, de préférence, construit sous forme de racloir pour éviter que lors de l'ouverture de la calotte 22 les particules qui y restent accrochées ne soient raclées par le joint 30.

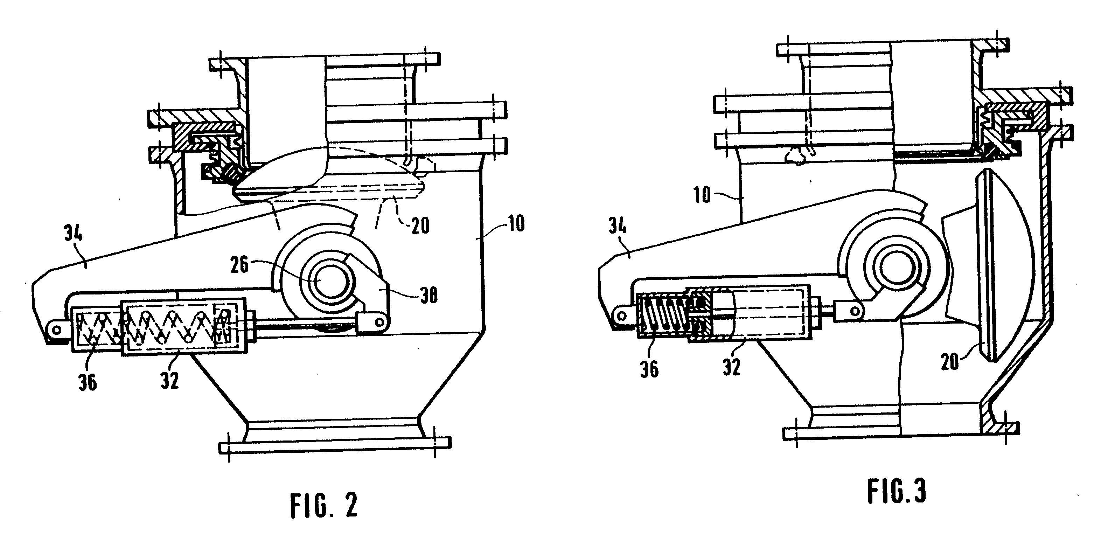

Les figures 2 et 3 illustrent schématiquement le mécanisme pour actionner l'obturateur 20. Ce mécanisme comporte un vérin 32 ou autre moyen d'entraînement qui est monté entre une console 34 solidaire du boîtier 10 et un bras 38 fixé à l'arbre 26. Comme il ressort des figures, la fermeture de l'obturateur 20, c.à.d. le pivotement de la calotte 22 de la position de la figure 3 vers la position de la figure 2 est réalisé par dégagement de la tige de piston du cylindre du vérin 32, l'ouverture étant réalisée par l'opération inverse.

Comme le montrent les figures, un ressort hélicoïdal est prévu à l'intérieur du vérin 32 et l'action de ce ressort 36 contribue à la fermeture de l'obturateur et s'oppose à son ouverture. Ce ressort 36 est prévu en association ou en remplacement du poids 28 de la figure 1 et sa puissance éventuellement associée à celle du poids 28 est suffisante pour fermer l'obturateur en cas de panne du vérin 32.

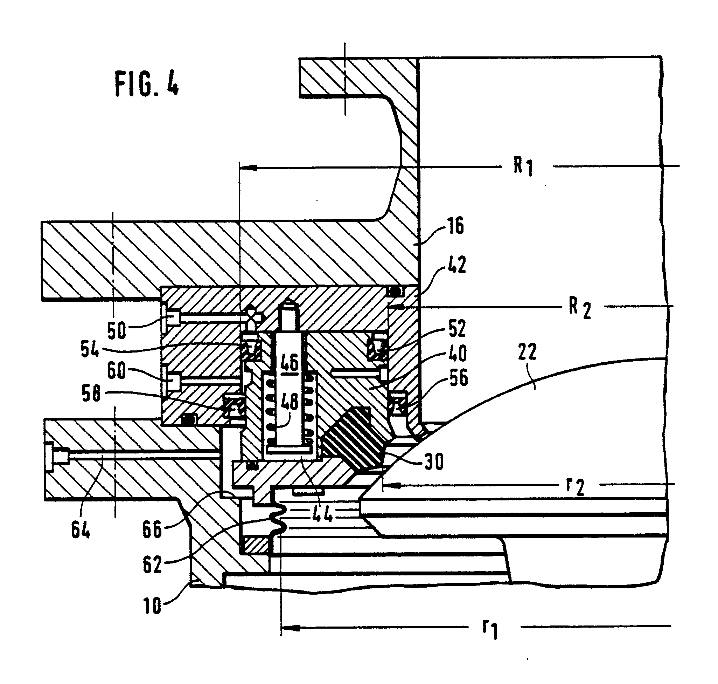

On va maintenant décrire quelques modes de réalisation permettant le déplacement axial du joint 30 par rapport à la calotte 22 de l'obturateur 20. Dans le premier mode de réalisation selon la figure 4, le joint 30 est fixé dans un support annulaire 40 à section sensiblement rectangulaire, qui est monté de façon coulissante dans un logement annulaire 42 entourant la tubulure 16. Ce logement 42 a une forme complémentaire à celle du support 40, en l'occurence une section en forme "U" renversé pouvant accueillir le support 40.

Le support 40 comporte, par ailleurs, une cavité 44 dans laquelle s'étend une tige 46 autour de laquelle est disposé un ressort hélicoïdal 48 dont l'action tend à soulever le support 40 et à le maintenir au fond de son logement 42. Sur la figure on n'a pu représenter qu'une seule paire de tiges 46 et de ressorts 48, mais il est évident que plusieurs couples de tiges et de ressorts sont prévus autour de la tubulure 16 dans le support 40.

La surface annulaire supérieure du support 40 peut être soumise à la pression d'un fluide pneumatique à travers un canal 50 s'étendant à travers le logement 42. La mise sous pression tente à faire descendre le support 40 contre l'action du ressort 48 de manière à appliquer le joint 30 sur la calotte 22. L'étanchéité pour exercer cette pression pneumatique est réalisée par un joint annulaire intérieur 52 et un joint annulaire extérieur 54.

Pour rendre le dispositif étanche à la pression règnant à l'intérieur du boîtier 10, le support 40 est également entouré d'un joint inférieur intérieur 56 et d'un joint inférieur extérieur 58.

Les quatre joints, 52, 54, 56 et 58 ont de préférence, comme représenté sur la figure, une section en "V" ou "U" de manière à s'ouvrir sous l'action de la pression qu'ils subissent. Pour la même raison, le support 40 comporte entre les deux joints intérieurs 52, 56 et entre les deux joints extérieurs 54 et 58 des rainures qui sont mises à l'air à travers un canal 60 du logement 42 pour contribuer à l'étanchéité de ces joints.

La force par laquelle le joint 30 est appliqué sur la calotte 22 sous l'action de la pression du fluide pneumatique est proportionnelle à la surface annulaire active du support 40, définie par les rayons $R_1$ et $R_2$ illustrés sur la figure.

La surface inférieure du support 40 subit l'influence de la pression à l'intérieur du boîtier et développe par conséquent une force dans le sens de l'ouverture, c.à.d. un soulèvement du joint 30 de la calotte 22. Afin de ne pas devoir utiliser une pression du fluide pneumatique supérieur à la pression dans le système de transport pour garantir le maintien du joint 30 dans sa position fermée on réduit, selon un autre aspect de la présente invention, la surface passive du support 40 qui est exposée à la pression à l'intérieur du boîtier 10. A cet effet on relie le support 40 par un compensateur étanche 62 à la paroi du boîtier 10 ce qui réduit la surface d'action de la pression à l'intérieur du boîtier à la surface annulaire définie par la différence entre les rayons $r_1$ et $r_2$ représentés sur les figures 2. En supposant que $r_2$ corresponde sensiblement à $R_2$ la force effective qui agit sur le support 40 dans la direction de fermeture du joint 30 est proportionnelle à la surface annulaire définie par les rayons $R_1$ et $r_1$.

Pour éviter, dans l'espace défini entre le compensateur 62, la paroi du boîtier 10 et le support 40, une accumulation de pression s'opposant à l'action du fluide pneumatique, cet espace est mis à l'air à travers un canal 64. Le même résultat pourrait toutefois être obtenu par la suppression du joint 58.

La paroi du boîtier 10 présente dans cet espace un épaulement radial intérieur 66 qui forme une butée limitant le mouvement de descente du support 40 sous l'action du fluide pneumatique.

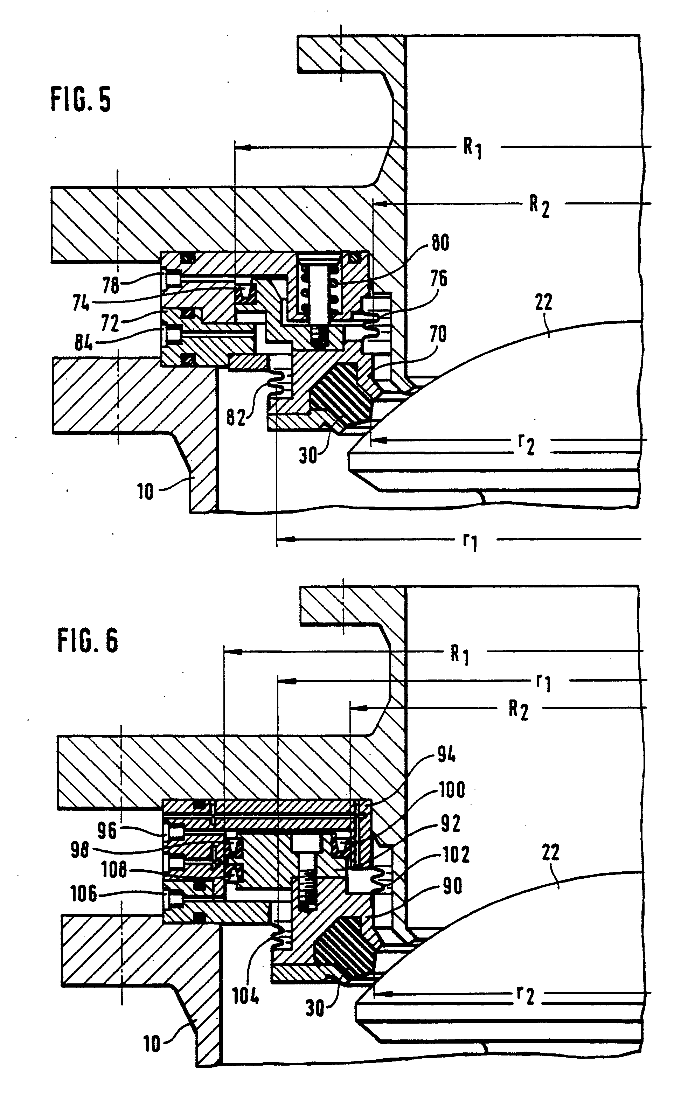

La figure 5 montre une variante du mode de réalisation de la figure 4 qui fonctionne de la même manière, mais dont l'arrangement permet une légère diminution de la hauteur du dispositif. Dans ce mode de réalisation le joint 30 est également fixé dans un support annulaire 70 qui est guidé axialement dans un logement annulaire 72 uniquement par sa partie périphérique moyennant un joint extérieur 74. Les deux joints intérieurs 52 et 56 de la figure 4 ont été supprimés et remplacés par un compensateur 76 qui relie le support 70 au logement 72 et qui assure l'étanchéité de la pression du fluide pneumatique envoyé par le canal 78. Le ressort 80 qui permet de soulever le joint 30 de la calotte 22 est prévu dans la masse du logement 72 plutôt que dans le support 40 comme dans le mode de réalisation de la figure 4. Le support 70 est également relié par un compensateur extérieur 82 à la paroi du boîtier 10 au logement 72 et l'espace délimité par ce compensateur 82 et le support 70 est également mis à l'air à travers un canal 84 pour permettre les variations de volume dues aux mouvements du support.

La surface active du support subissant l'action de la pression du fluide pneumatique est délimitée par les rayons $R_1$ et $R_2$ et cette surface est plus grande que la surface passive définie par les rayons $r_1$ et $r_2$ subissant l'action de la pression dans le boîtier.

Dans le mode de réalisation de la figure 6 le joint 30 est également fixé dans un support annulaire 90 qui, cette fois, est solidaire d'un piston annulaire 92 déplaçable axialement dans un logement annulaire 94 à section rectangulaire. L'étanchéité du piston 92 vis-à-vis de la pression du fluide pneumatique introduit en 96 est assuré par un joint extérieur 98 et un joint intérieur 100. Comme dans le mode de réalisation de la figure 5, le support 90 est relié de manière étanche au logement 94 par un compensateur intérieur 102 et un compensateur extérieur 104, dont les rayons moyens respectifs $r_2$ et $r_1$ définissent la surface passive subissant l'action de la pression dans le boîtier 10.

Contrairement au mode de réalisation précédent, le soulèvement du joint 30 n'est plus assuré par un ressort, mais par voie pneumatique. A cet effet, l'espace délimité par le compensateur extérieur 104, le support 90, une partie de la face inférieure du piston 92 et une partie du logement 94 est raccordée en 106 à la pression du fluide pneumatique, un joint annulaire 108 autour du piston 92 assurant l'étanchéité entre celui-ci et le logement 94. A l'aide d'une vanne non représentée, la pression du fluide pneumatique peut donc être appliquée soit en 96, soit en 106 avec mise à l'air simultanée du canal 96 ou 106 qui n'est pas branché sur la pression pneumatique. Si la pression pneumatique se trouve en 96, le joint 30 est appliqué sur la calotte 22, tandis que si la pression se trouve en 106, le piston 92 est soulevé et dégage le joint 30 de la calotte 22.

L'espace délimité par le compensateur intérieur 102 est mis à l'air à travers des canaux appropriés dans le logement 94 pour permettre les variations de volume.

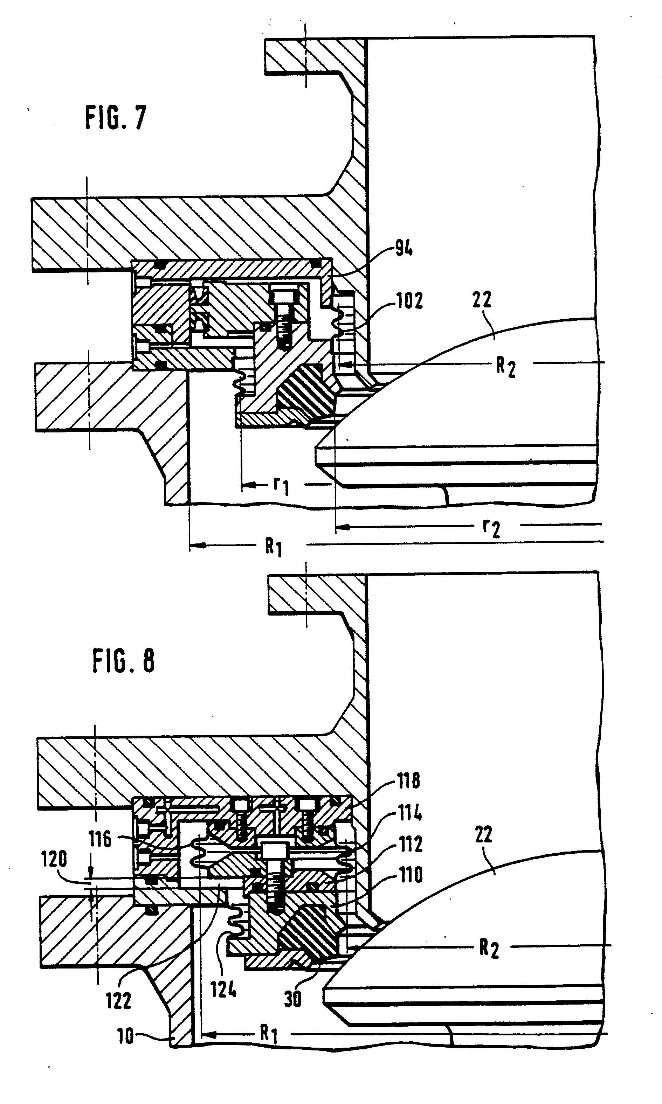

La figure 7 représente une variante du mode de réalisation de la figure 6. La seule différence réside dans la suppression du joint intérieur 100 du mode de réalisation de la figure 6. Le piston 92 n'est guidé dans le logement 94 que par sa région périphérique. L'effet de la suppression de ce joint se traduit par le fait que la surface active supérieure du piston 92 s'étend maintenant jusqu' au niveau de compensateur intérieur 102 dont le rayon est $R_2$.

La figure 8 représente un mode de réalisation qui fonctionne de la même manière que les modes de réalisation des figures 6 et 7 mais dans lesquels tous les joints ont été remplacés par des compensateurs.

Le support 110 du joint 30 est solidaire d'un piston 112 qui est suspendu par un compensateur intérieur 114 et un compensateur extérieur 116 à une carcasse annulaire 118. La pression pneumatique est donc appliquée soit dans l'espace délimité intérieurement par les compensateurs 114 et 116 au-dessus du piston 112 en vue d' appliquer le joint 30 sur la calotte 22, soit dans l'espace annulaire 122 à l'extérieur du joint 116 et du support 110 et à l'intérieur de compensateur 124 en vue d'agir sur la surface périphérique inférieure du piston 110 pour soulever le joint 30 de la calotte 22.

La surface active du vérin disponible pour la fermeture du joint 30 est celle délimitée par les rayons moyens des compensateurs 114 et 116 représentée respectivement par $R_2$ et $R_1$ sur la figure, cette surface étant sensiblement supérieure à celle délimitée par $r_2$ et $r_1$ subissant l'action de la pression dans le boîtier 10.

Dans chacun des modes de réalisation des figures 5 à 8, la descente du support du joint est limitée à l'instar de la limitation formée par la butée 66 de la figure 4 pour éviter un écrasement du joint 30 sur la calotte 22 en cas d'aération du boîtier en aval du joint 30.

## Revendications

1. Dispositif d'obturation de conduites de transport de produits en vrac comprenant un boîtier (10) avec une ouverture (18) de passage circulaire, un élément de fermeture (20) en forme de calotte sphérique (22) monté de manière pivotante dans le boîtier (10), des moyens (32) pour faire pivoter ledit élément de fermeture (22) entre une position de fermeture transversale par rapport à ladite ouverture de passage (18) et une position latérale de dégagement de l'ouverture, un joint d'étanchéité circulaire (30) entourant ladite ouverture et pouvant coopérer avec la partie périphérique de l'élément de fermeture (20), ledit joint étant monté sur un support annulaire (40), (70), (90), (110) déplaçable axialement vers l'élément de fermeture (20) sous l'action d'un fluide pneumatique, ledit support annulaire comportant, à cet effet, une surface annulaire active soumise à la pression du fluide pneumatique et qui est opposée à une surface annulaire passive exposée à la pression dans ledit boîtier, caractérisé en ce que la surface active du support (30), (70), (90), (110) est plus grande que sa surface passive.

2. Dispositif selon la revendication 1, caractérisé en ce que le support (40), (70), est soumis à l'action d'un ressort (48), (80) qui exerce ses effets dans le sens opposé à celui du fluide pneumatique;

3. Dispositif selon la revendication 1, caractérisé en ce que le support (40) est monté dans un logement annulaire (42) entourant ladite ouverture (18), par l'intermédiaire d'un joint intérieur (52) et d'un joint extérieur (54) contenant la pression du fluide pneumatique et d'un joint intérieur (56) et d'un joint extérieur (58) contenant la pression dans le boîtier (10).

4. Dispositif selon la revendication 3, caractérisé en ce que l'espace entre les joints intérieurs (52), (56) et l'espace entre les joints extérieurs (54), (58) est mis à l'air.

5. Dispositif selon la revendication 3, caractérisé en ce que la surface annulaire passive du support (40) est délimitée intérieurement par le joint (56) et extérieurement par un compensateur à soufflet (62) qui relie le support (40) à la paroi du boîtier (10).

6. Dispositif selon la revendication 5, caractérisé en ce que ledit compensateur (62) délimite avec le support (40) et la paroi du boîtier (10) une chambre qui est mise à l'air.

7. Dispositif selon la revendication 6, caractérisée en ce que la paroi du boîtier (10) comporte dans ladite chambre un épaulement radial (66) formant une butée pour ledit support (40).

8. Dispositif selon l'une quelconque des revendications 1 ou 2, caractérisée en ce que le support (70) est monté dans un logement annulaire entourant ladite ouverture (18), par l'intermédiaire d'un joint extérieur (74) et d'un compensateur à soufflet intérieur (76).

9. Dispositif selon la revendication 8, caractérisé en ce que la surface annulaire passive du support (70) est délimitée intérieurement par le compensateur à soufflet (76) et extérieurement par un compensateur à soufflet (82) qui relie le support (70) à la paroi du boîtier (10) au logement annulaire.

10. Dispositif selon la revendication 1, caractérisé en ce que le support (90), est solidaire d'un piston annulaire pneumatique (92) coulissant axialement dans une chambre pneumatique annulaire (94) à laquelle le support est relié par un compensateur à soufflet intérieur (102) et un compensateur à soufflet extérieur (104) et en ce que les deux surfaces opposées du piston (92) peuvent être connectées alternativement à la même source de fluide pneumatique pour déplacer le joint (30) soit vers l'élément de fermeture (20), soit dans le sens opposé.

11. Dispositif selon la revendication 10, caractérisé en ce que l'étanchéité latérale du piston (92) isolant, l'une de l'autre, les deux surfaces opposées du piston (92) est réalisé par des joints annulaires extérieurs (98), (108).

12. Dispositif selon les revendications 10 et 11, caractérisé en ce que l'étanchéité de la surface active du piston (92) est réalisée extérieurement et intérieurement par des joints (98), (100).

13. Dispositif selon les revendications 10 et 11, caractérisé en ce que l'étanchéité de la surface active du piston (92) est réalisée extérieurement par un joint (98) et intérieurement par le compensateur à soufflet (92) reliant le support (90) à la chambre pneumatique annulaire (94).

14. Dispositif selon l'une quelconque des revendications 3 à 13, caractérisé en ce que tous les joints ont une section en "U" s'ouvrant sous l'effet de la pression qu'ils subissent.

15. Dispositif selon la revendication 1, caractérisé en ce que le support est solidaire d'un piston annulaire pneumatique (112) attaché à une carcasse annulaire (118) par l'intermédiaire d'un compensateur à soufflet intérieur (114) et d'un compensateur à soufflet extérieur (116) qui délimite avec le piston une chambre pneumatique étanche (120) dont la mise sous pression applique le joint (30) sur l'élément de fermeture· (22) et en ce que le support (110) est relié par un autre compensateur (124) à la carcasse (118) pour définir avec le compensateur extérieur (116) une chambre pneumatique étanche (122) dans laquelle s'étend une partie périphérique du piston (112) et dont la mise sous pression soulève le joint (30) de l'élément de fermeture (20).

16. Dispositif selon l'une quelconque des revendications 1 à 15, caractérisée en ce que le bord de l'ouverture de passage (18) est conçu sous forme de racloir.

FIG. 1

FIG.3

FIG. 2

FIG. 4

# FIG. 5

# FIG. 6

FIG. 7

FIG. 8